# EUROPÄISCHE PATENTSCHRIFT

(11) **EP 2 910 597 B1**
(45) Veröffentlichungstag und Bekanntmachung des Hinweises auf die Patenterteilung: **26.12.2018**
(21) Anmeldenummer: 14156190.2
(22) Anmeldetag: 21.02.2014
(51) Int. Cl.: C08J 5/10, C08L 77/00, C08J 5/04, C08L 77/06

(54) **Thermoplastische Zusammensetzungen**
Thermoplastic compositions
Compositions thermoplastiques

(43) Veröffentlichungstag der Anmeldung: 26.08.2015
(73) Patentinhaber: LANXESS Deutschland GmbH, 50569 Köln (DE)
(72) Erfinder: Benighaus, Tobias, 40215 Düsseldorf (DE); Joachimi, Detlev, 47800 Krefeld (DE); Margraf, Günter, 41539 Dormagen (DE)

(56) Entgegenhaltungen:
- EP-A1- 2 573 138
- EP-A1- 2 881 438
- DE-A1-102008 052 055
- US-A- 5 204 396
- US-A1- 2005 250 885
- US-A1- 2009 069 478
- US-A1- 2014 051 795

## Beschreibung

Die vorliegende Erfindung betrifft Zusammensetzungen auf Basis Langfaser-verstärkter Polyamide, ein Verfahren zur Herstellung dieser Zusammensetzungen, sowie Erzeugnisse erhältlich aus Langfaserverstärkungen, die mit einer Thermoplastschmelze auf Basis von PA6 imprägniert wurden, wobei die Thermoplastschmelze wenigstens einen Wärmestabilisator in Kombination mit wenigstens einem Amidwachs enthält.

Die Verstärkung von Erzeugnissen auf Basis thermoplastischer Formmassen ist seit vielen Jahren Stand der Technik. Üblicherweise werden bei der Herstellung von Thermoplast-Zusammensetzungen Schnittglasfasern zur Thermoplastschmelze gegeben, um die mechanischen Eigenschaften von daraus herzustellenden Erzeugnissen zu verbessern. Der Einsatz von Schnittglasfasern in Polyamid-Formmassen führt dann zu deutlich erhöhten Steifigkeiten und Festigkeiten der Erzeugnisse im Vergleich zu Erzeugnissen ohne Schnittglasfasern. Üblicherweise werden Schnittglasfasern mit Längen im Bereich von 2 bis 8 mm eingesetzt. Durch die bei einem Mischvorgang auftretende Scherung werden allerdings die Schnittglasfasern zu deutlich kürzeren Einheiten zerbrochen. Als Folge dessen liegt der Mittelwert der Faserlängenverteilung der Schnittglasfasern nach einer Mischung der Komponenten zumeist im Bereich von 100 bis 500 µm [Technische Thermoplaste 4. Polyamide, Hrsg.: G. W. Becker und D. Braun, Carl Hanser Verlag, 1998, S. 102 - 107].

Aufgrund dieser Verkürzung der mittleren Faserlängen in einem Mischprozess können Zusammensetzungen aus Polyamid und Schnittglasfasern die Anforderungen nach höheren Festigkeiten und Steifigkeiten von daraus herzustellenden Erzeugnissen teilweise nicht erfüllen.

Durch Langfaserverstärkungen hingegen können bei daraus herzustellenden Erzeugnissen deutlich bessere mechanische Eigenschaften erzielt werden. Daher wurden unterschiedliche Verfahren entwickelt, um Langfaserverstärkungen beispielsweise mit einer thermoplastischen Polyamid-Matrix zu imprägnieren und in die Form eines Erzeugnisses zu bringen. Bei vielen dieser Prozesse wird in einem Zwischenschritt ein Halbzeug gefertigt, welches anschließend in einem oder mehreren weiteren Verarbeitungsschritten zu einem Enderzeugnis geformt wird. **[**K. Brast, Dissertation "Verarbeitung von Langfaser-verstärkten Thermoplasten im direkten Plastifizier-/Pressverfahren", Rheinisch-Westfälische Technische Hochschule Aachen, 2001**]**

So beschreibt US 7977449 B2 ein Granulat basierend auf einer Polyamid-Matrix mit stark verzweigter Molekularstruktur und mit parallel zur Länge der einzelnen Granulatkörner ausgerichteten Langfasern und ein Verfahren, bei dem Langfasern und eine Polyamid-Matrix mit stark verzweigter Molekularstruktur in Kontakt gebracht werden.

US 8476355 B2 beschreibt ein Verfahren, bei dem Glasfasern mit einer Länge von 5 bis 20 mm erst mit einem thermoplastischen Harz von niedriger Viskosität imprägniert und die Mischung anschließend zu einem thermoplastischen Harz mit höherer Viskosität gegeben wird.

Des Weiteren beschreibt WO 2011/134930 A1 thermoplastische Polyamid-Formmassen, die neben einem faserförmigen Verstärkungsstoff mit einer Faserlänge von 3 bis 24 mm auch noch unpolares Polyolefin auf Basis von Ethylen oder Propylen sowie optional noch nanopartikuläres Oxid oder Oxidhydrat enthalten.

Im zitierten Stand der Technik wird jedoch nicht das Problem adressiert, dass in den dort beschriebenen Verfahren, in denen Langfaserverstärkungen mit einer Polyamidschmelze imprägniert werden, die Polyamidschmelze zu Emissionen neigt.

In US-A 5204396 werden solche Emissionen aus Langfaser-verstärkten Polyamid-Formmassen in derartigen Prozessen in Form von Rauch durch den Einsatz von Verarbeitungshilfsmitteln, bevorzugt Metallsalzen von Fettsäuren mit 22 bis 32 Kohlenstoffatomen, insbesondere durch den Einsatz von Lithium-, Zink-, Calcium- oder Aluminiumsalzen der Behensäure, Triacontansäure, Dotriacotansäure oder Erucasäure, reduziert. Trotz Verwendung der aus US-A 5204396 bekannten Verarbeitungshilfsmittel neigen Langfaser-verstärkte Polyamid-Schmelzen jedoch immer noch zu signifikanten Emissionen.

Die **Aufgabe der vorliegenden Erfindung** bestand daher in der Bereitstellung von Zusammensetzungen auf Basis einer Langfaserverstärkung woraus Erzeugnisse hergestellt werden können, ohne dass es zu Emissionen kommt oder dass diese Emissionen im Vergleich zu bisherigen Verfahren zumindest erheblich reduziert werden.

**Überaschenderweise wurde gefunden,** dass die Emissionen bei der Verarbeitung einer Polyamidschmelze mit Langfasern durch Zugabe wenigstens eines Wärmestabilisators und durch die Verwendung wenigstens eines Amid- und/oder wenigstens eines Esterwachses als Entformungshilfsmittel deutlich verringert werden können.

**Die Lösung der Aufgabe** und damit Gegenstand der vorliegenden Erfindung sind deshalb Zusammensetzungen enthaltend als Edukte
a) PA6
b) wenigstens einen Wärmestabilisator und
c) wenigstens ein Amidwachs sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen, und die Langfaserverstärkung bis zu 10 Gew.-% wenigstens eines Zusatzstoffes enthält,
wobei als Wärmestabilisator wenigstens ein Kupferhalogenid der Gruppe Kupferchlorid, Kupferbromid und Kupferiodid in Kombination mit wenigstens einem Natrium- oder Kaliumhalogenid der Gruppe Natriumchlorid, Natriumbromid, Natriumiodid, Kaliumchlorid, Kaliumbromid und Kaliumiodid eingesetzt wird.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

Bevorzugt betrifft die vorliegende Erfindung **Zusammensetzungen** enthaltend als Edukte
a) 15 bis 89,79 Gew.-% PA6
b) 0,01 bis 2 Gew.-% wenigstens eines Wärmestabilisators und
c) 0,05 bis 3 Gew.-% wenigstens eines Amidwachses sowie
d) 10,1 bis 80 Gew.-% Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die Langfaserverstärkung bis zu 10 Gew.-% wenigstens eines Zusatzstoffes enthält.
wobei als Wärmestabilisator wenigstens ein Kupferhalogenid der Gruppe Kupferchlorid, Kupferbromid und Kupferiodid in Kombination mit wenigstens einem Natrium- oder Kaliumhalogenid der Gruppe Natriumchlorid, Natriumbromid, Natriumiodid, Kaliumchlorid, Kaliumbromid und Kaliumiodid eingesetzt wird und
wobei die Summe aller Gewichtsprozente der Komponenten a) bis d) stets 100 ergibt und die Langfaserverstärkung bis zu 10 Gew.-% wenigstens eines Zusatzstoffes enthält.

Die Herstellung der erfindungsgemäßen Zusammensetzungen erfolgt durch Mischen der als Edukte einzusetzenden Komponenten a) bis d) in wenigstens einem Mischwerkzeug. Hierbei werden als Zwischenprodukte Formmassen erhalten. Die Formmassen können entweder ausschließlich aus den Komponenten a) bis d) bestehen oder aber zusätzlich zu den Komponenten a) bis d) noch weitere Komponenten enthalten. In diesem Fall sind die Komponenten a) bis d) im Rahmen der angegebenen Mengenbereiche so zu variieren, dass die Summe aller Gewichtsprozente stets 100 ergibt.

Im Rahmen der vorliegenden Erfindung bedeutet in einem Mischwerkzeug bevorzugt in wenigstens einem Mischwerkzeug, besonders bevorzugt in einem Mischwerkzeug, ganz besonders bevorzugt in einem Extruder mit Extruderschnecke. In einem Presswerkzeug bedeutet bevorzugt in wenigstens einem Presswerkzeug, besonders bevorzugt in einem Presswerkzeug, ganz besonders bevorzugt in einer Doppelbandpresse. Ein Werkzeugauslass bedeutet bevorzugt wenigstens ein Werkzeugauslass, besonders bevorzugt ein Werkzeugauslass, ganz besonders bevorzugt ein Extruderauslass, insbesondere eine Düse, insbesondere ganz besonders bevorzugt eine Breitschlitzdüse.

In einer Ausführungsform handelt es sich bei den erfindungsgemäßen Zusammensetzungen um **Granulate.** Diese haben bevorzugt eine Länge von wenigstens 5 mm.

In einer weiteren Ausführungsform sind die erfindungsgemäßen Zusammensetzungen aus den **Granulaten** durch Extrusion oder Spritzguss herzustellende **Zwischenprodukte** oder durch Pressvorgänge herzustellende **endlosfaserverstärkte Halbzeuge,** sowie um wiederum aus diesen Zwischenprodukten und endlosfaserverstärkten Halbzeugen herzustellende **Erzeugnisse, Formteile oder Bauteile.**

**Endlosfaserverstärkte Halbzeuge** im Sinne der vorliegenden Erfindung werden im Stand der Technik auch als plattenförmige oder faserverstärkte Verbundwerkstoffe, laminierte Formkörper oder Laminate, Faserverbundstruktur, Faserverbundhalbzeug, textiles Halbzeug, FV-Thermoplast, Komposit (Struktur), Organoblech etc. bezeichnet.

Handelt es sich bei den erfindungsgemäßen Erzeugnissen um **endlosfaserverstärkte Halbzeuge** oder um daraus herzustellende Erzeugnisse, Bauteile oder Formteile, so weist die Langfaserverstärkung und die darin verwendeten Langfasern eine Länge bis hin zu mehreren Metern auf. Eine Limitierung der Langfaserlänge in der Langfaserverstärkung bzw. in erfindungsgemäßen Erzeugnissen in Form von Halbzeugen, sowie den aus diesen Halbzeugen herzustellenden **Erzeugnissen,** ergibt sich allenfalls aus der Handhabbarkeit, dem Transport etc. dieser Halbzeuge und Erzeugnisse.

Die erfindungsgemäßen Zusammensetzungen in Form von **Granulaten** zeichnen sich in bevorzugter Form dadurch aus, dass die Langfasern zusätzlich zur Bedingung, dass diese einen Faserdurchmesser im Bereich von 5 bis 25 µm und 80% eine Mindestlänge von wenigstens 5 mm haben, eine parallele Ausrichtung zur Länge der einzelnen Granulatkörner aufweisen.

Besonders bevorzugt besitzen die Granulate eine zylindrische Form oder eine Würfelform. Insbesondere bevorzugt ist eine zylindrische Form.

Bevorzugt liegt die Länge der Langfasern in den erfindungsgemäßen **Granulaten** im Bereich von 5 mm bis 20 mm. Durch nachfolgende Verarbeitungsprozesse, insbesondere Mischprozesse, in einem Mischwerkzeug, in einer Extrusion oder im Spritzguss, kann verarbeitungsbedingt eine Verkürzung auf Längen im Bereich von 100 bis 150 µm eintreten.

Da die meisten Verarbeiter Kunststoff in Form von Granulat benötigen, spielt das Granulieren eine immer wichtigere Rolle. Man unterscheidet grundsätzlich zwischen Heiß- und Kaltabschlag. Je nach Verarbeitung resultieren daraus verschiedene Kornformen. Im Falle der Heißabschlags erhält man das Granulat in Perlen oder Linsenkornform, im Falle des Kaltabschlags erhält man das Granulat in Zylinderformen oder Würfelformen. Erfindungsgemäße Zusammensetzungen in Granulatform werden bevorzugt durch Kaltabschlag erhalten. Hierzu wird der Austrittsstrang der durch Mischen der Komponenten a) bis d) im Mischwerkzeug erhaltenen Formmasse aus einem Mischwerkzeug, bevorzugt der Extrusionsstrang aus einem Extruder, direkt nach dem Mischwerkzeugauslass, bevorzugt wenigstens einer Austrittsdüse aus einem Extruder, durch ein Wasserbad gezogen und anschließend in festem Zustand durch einen Granulator, bevorzugt durch eine rotierende Messerwalze, in die für das herzustellende Granulat gewünschte Länge geschnitten.

Die vorliegende Erfindung betrifft auch ein **Verfahren zur Verhinderung oder zur Reduktion von Emissionen** während der Verarbeitung Langfaser-verstärkter PA6- oder PA66-basierter oder auf Copolyamiden von PA6 oder PA66 basierenden Formmassen, indem wenigstens ein Wärmestabilisator und wenigstens ein Amidwachs und/oder wenigstens ein Esterwachs vermischt wird und die Langfaserverstärkung(en) zu mindestens 90 Gew.-% aus Fasern mit einem Faserdurchmesser im Bereich von 5 bis 25 µm bestehen, wovon mindestens 80 % der Fasern eine Länge von wenigstens 5 mm aufweisen, und die Langfaserverstärkung bis zu 10 Gew.-% wenigstens eines Zusatzstoffes enthält.

Bevorzugt erfolgt die Verhinderung oder die Reduktion von Emissionen aus PA6-basierenden Formmassen die in der Schmelze vorliegen. Bevorzugt fallen diese Schmelzen in Verarbeitungsprozessen der PA6-basierenden Formmassen an, bevorzugt in Extrusionsprozessen, beim Spritzguss oder bei einem Pressvorgang in einem Presswerkzeug, bevorzugt in Doppelbandpressen. Bei den zu verhindernden oder zu reduzierenden Emissionen handelt es sich bevorzugt um in Form von Rauch auftretende Zersetzungsprodukte des oder der eingesetzten Polyamide.

Gegenstand der vorliegenden Erfindung ist ferner ein **Verfahren** zur Herstellung erfindungsgemäßer Zusammensetzungen, dadurch gekennzeichnet, dass man als Edukte
a) Polyamid 6 (PA6)
b) wenigstens einen Wärmestabilisator und
c) wenigstens ein Amidwachs
   (la) bei Temperaturen im Bereich von 220 bis 400 °C, bevorzugt im Bereich von 240 bis 380 °C, besonders bevorzugt im Bereich von 250 °C bis 350 °C und bei Drücken im Bereich von 2 bis 50 bar, bevorzugt im Bereich von 5 bis 40 bar, besonders bevorzugt im Bereich von 10 bis 35 bar in einem Mischwerkzeug (1) vermischt und aufschmilzt,
   (Ib) danach die Komponente d) in Form von Fasern zur Schmelze enthaltend die Komponenten a) bis c) im Mischwerkzeug (1) hinzu gibt und vermischt, und schließlich
   (Ic) die Schmelze enthaltend die Komponenten a) bis d) aus dem Mischwerkzeug (1) austrägt und gegebenenfalls weiteren Verarbeitungsschritten unterwirft,
   oder nach dem Verfahrensschritt (la)
   (IIb) die Schmelze enthaltend die Komponenten a) bis c) aus dem Mischwerkzeug (1) in ein Mischwerkzeug (2) überführt und die Komponente d) in Form von Fasern oder Garnen der Schmelze im Mischwerkzeug (2) zuführt und mit dieser Schmelze imprägniert, und
   (IIc) danach die Schmelze enthaltend die Komponenten a) bis d) im Mischwerkzeug (2) über einen Mischwerkauslass austrägt und gegebenenfalls weiteren Verarbeitungsschritten unterwirft,
   oder nach dem Verfahrensschritt (la)
   (IIIb) die Komponente d) in Form von Fasern oder Garnen in dasselbe Mischwerkzeug (1) des Verfahrensschrittes (la) dosiert, und
   (IIIc) danach die Schmelze enthaltend die Komponenten a) bis d) über einen Mischwerkzeugauslass austrägt und gegebenenfalls weiteren Verarbeitungsschritten unterwirft, oder nach dem Verfahrensschritt (la)
   (IVb) die Schmelze aus dem Mischwerkzeug (1) über einen Mischwerkzeugauslass mit wenigstens zwei Lagen der in zweidimensionaler Form vorliegenden Komponente d) in Kontakt gebracht wird, und
   (IVc) diese Mischung der Komponenten a) bis d) in ein Presswerkzeug überführt und miteinander zu einem Erzeugnis verpresst,
wobei Komponente d) eine Langfaserverstärkung ist, die zu mindestens 90 Gew.-% Fasern mit einem Faserdurchmesser im Bereich von 5 bis 25 µm enthält wovon mindestens 80 % eine Länge von wenigstens 5 mm aufweisen.

Durch die Variante (IVb) und (IVc) erhält man Erzeugnisse, die bevorzugt die Form zweidimensionaler Halbzeuge besitzen und als **endlosfaserverstärkte Halbzeuge** bezeichnet werden.

Das Produkt des erfindungsgemäßen Verfahrens wird im Rahmen der vorliegenden Erfindung auch als "Imprägnat" bezeichnet. Unter Imprägnieren wird im Sinne dieser Erfindung der Schritt verstanden, bei dem die Komponente d) mit der Schmelze enthaltend die Komponenten a) bis c) in Kontakt gebracht und gemischt wird.

Erfindungsgemäß umfasst die vorliegende Erfindung die Verfahrensvarianten:
i) (Ia), (Ib) und (Ic)
ii) (Ia), (IIb) und (IIc)
iii) (Ia), (IIIb) und (IIIc) sowie
iv) (Ia), (IVb) und (IVc).

In einer Ausführungsform wird in einem weiteren, sich an die Verfahrensschritte (Ic), (IIc) oder (IIIc) anschließenden Verarbeitungsschritt (V), das Imprägnat portioniert.

In einer Ausführungsform wird in einem weiteren, sich an den Verfahrensschritt (V) anschließenden Verarbeitungsschritt (VI) das portionierte Imprägnat in ein formgebendes Presswerkzeug überführt und dort in die Form eines Erzeugnisses, Halbzeugs oder Bauteils überführt.

Zusammensetzungen gemäß des Standes der Technik neigen besonders bei den Verfahrensschritten des Austragens, Portionierens oder bei der Überführung in die weitere Verarbeitung eines Imprägnats zu hohen Emissionen. Überraschenderweise werden diese Emissionen im Falle von Langfaser-verstärkten PA6- oder PA66-basierten Zusammensetzungen oder auf Copolyamiden von PA6 oder PA66 basierenden Zusammensetzungen durch Verwendung der erfindungsgemäßen Kombination von wenigstens einem Wärmestabilisator und wenigstens einem Amidwachs und/oder wenigstens einem Esterwachs deutlich reduziert.

In der Verfahrensvariante mit den **Schritten (Ia), (IIb) und (IIc)** wird zunächst im Verfahrensschritt (la) eine Zusammensetzung enthaltend die Komponenten a) bis c) in wenigstens ein Mischwerkzeug (1) dosiert, dort aufgeschmolzen und vermischt. Anschließend wird die Schmelze in wenigstens ein Mischwerkzeug (2) überführt und im Verfahrensschritt (IIb) die Komponente d) der Schmelze zugeführt und mit der Schmelze vermischt, wobei in diesem Fall als Komponente d) Fasern oder Garne eingesetzt werden. Über die Zahl der Garne kann der Fasergehalt der resultierenden Zusammensetzung eingestellt werden. Nach der Imprägnierung der Komponente d) im Mischwerkzeug (2) wird das Imprägnat über einen Mischwerkzeugauslass, bevorzugt einen Extruderauslass, besonders bevorzugt eine Düse, ganz besonders bevorzugt eine Breitschlitzdüse, ausgetragen. Diese Verfahrensvariante ist dadurch charakterisiert, dass die Verfahrensschritte (Ia), (IIb) in zwei verschiedenen Mischwerkzeugen durchgeführt.

In der Verfahrensvariante mit den **Schritten (Ia), (IIIb) und (IIIc)** wird zunächst im Verfahrensschritt (la) eine Zusammensetzung enthaltend die Komponenten a) bis c) in ein Mischwerkzeug (1) dosiert, aufgeschmolzen und vermischt und im Verfahrensschritt (IIIb) die Komponente d) in dasselbe Mischwerkzeug (1) dosiert, wobei als Komponente d) Fasern oder Garne eingesetzt werden. Nach der Imprägnierung der Komponente d) wird das Imprägnat über wenigstens einen Mischwerkzeugauslass, bevorzugt einen Extruderauslass, besonders bevorzugt eine Düse, ganz besonders bevorzugt eine Breitschlitzdüse, ausgetragen. In dieser Verfahrensvariante werden die Verfahrensschritte (la) und (IIIb)) in demselben Mischwerkzeug (1) durchgeführt.

In einer bevorzugten Ausführungsform wird in allen Verfahrensvarianten eine Zusammensetzung enthaltend die Komponenten a) bis c) als Vormischung eingesetzt.

In einer bevorzugten Ausführungsform wird in allen Verfahrensvarianten die Komponente d) vor der Dosierung vorgewärmt.

In bevorzugter Ausführungsform werden in allen Verfahrensvarianten, insbesondere in der Verfahrensvariante, die durch die **Schritte (Ia), (IVb) und (IVc)** gekennzeichnet ist, die Komponente d) in zweidimensionaler Form eingesetzt und mit einer Schmelze enthaltend die Komponenten a) bis c) imprägniert.

Als Komponente d) in zweidimensionaler Form werden bevorzugt Gelege, Gewebe, Geflechte, Gestricke, Gesticke oder Vliese, besonders bevorzugt Gewebe, Gelege oder Vliese, ganz besonders bevorzugt Vliese, Gewebe oder Gelege aus Glasfasern oder Carbonfasern, insbesondere bevorzugt Vliese, Gewebe oder Gelege aus E-Glasfasern, eingesetzt.

In der Verfahrensvariante mit den **Schritten (Ia), (IVb) und (IVc)** wird im Verfahrensschritt (la) eine Zusammensetzung enthaltend die Komponenten a) bis c) in ein Mischwerkzeug (1) dosiert, aufgeschmolzen, vermischt und im Verfahrensschritt (IVb) über einen Mischwerkauslass, bevorzugt einen Extruderauslass, besonders bevorzugt eine Düse, ganz besonders bevorzugt eine Breitschlitzdüse, aus dem Mischwerkzeug (1) mit wenigstens zwei Lagen der in zweidimensionaler Form vorliegenden Komponente d) in Kontakt gebracht. Im daran anschließenden Verfahrensschritt (IVc) wird diese Mischung in wenigstens ein Presswerkzeug, bevorzugt in wenigstens eine Doppelbandpresse, überführt, wo die Imprägnierung der Komponente d) abgeschlossen und das Imprägnat in die Form eines Erzeugnisses, bevorzugt in die Form eines zweidimensionalen Halbzeugs, gebracht wird.

Bevorzugt wird das Verfahren mit den **Verfahrensschritten (Ia), (IVb) und (IVc)** auch für die Herstellung von Halbzeugen oder Erzeugnissen mit drei oder mehr Lagen der Komponente d) eingesetzt, indem eine definierte Zahl n Extrudate enthaltend die Komponenten a) bis c) ausgetragen und zwischen n+1 Lagen der Komponente d) abgelegt werden.

In allen Ausführungsformen des erfindungsgemäßen Verfahrens werden als Mischwerkzeuge bevorzugt Extruder eingesetzt. Dem Fachmann steht es jedoch frei, alternative Mischwerkzeuge in den jeweiligen Verfahrensschritten einzusetzen, die geeignet sind, ein optimales Mischergebnis hinsichtlich einer Mischung der Komponenten a) bis c) bzw. a) bis d) in den erfindungsgemäßen Zusammensetzungen zu erzielen. Ein Extruder ist ein bevorzugtes Mischwerkzeug im Sinne der vorliegenden Erfindung.

Bevorzugt als Mischwerkzeuge (1) und (2) einzusetzende Extruder sind Einschneckenextruder oder Doppelschneckenextruder sowie die jeweiligen Untergruppen, ganz besonders bevorzugt konventionelle Einschneckenextruder, förderwirksame Einschneckenextruder, gegenläufige Doppelschneckenextruder oder gleichläufige Doppelschneckenextruder, eingesetzt. Die als Mischwerkzeuge einzusetzenden Extruder (1) und (2) sind dem Fachmann aus Technische Thermoplaste 4. Polyamide, Hrsg.: G. W. Becker und D. Braun, Carl Hanser Verlag, 1998, S. 311-314 sowie K. Brast, Dissertation "Verarbeitung von Langfaser-verstärkten Thermoplasten im direkten Plastifizier-/Pressverfahren", Rheinisch-Westfälische Technische Hochschule Aachen, 2001, S. 30 - 33 bekannt.

Das in der Verfahrensvariante mit den **Schritten (Ia), (IIb) und (IIc)** einzusetzende Mischwerkzeug (2) wird bevorzugt bei Temperaturen im Bereich von 250 bis 350 °C und bei Drücken im Bereich von 10 bis 35 bar betrieben.

In der Verfahrensvariante mit den **Schritten (Ia), (IVb) und (IVc)** wird im Verfahrensschritt (IVc) ein Presswerkzeug, bevorzugt wenigstens eine Doppelbandpresse eingesetzt. Das Presswerkzeug, bevorzugt die Doppelbandpresse(n) werden bevorzugt bei Temperaturen im Bereich von 250 bis 350 °C und bei Drücken im Bereich von 10 bis 35 bar betrieben.

Erfindungsgemäß einzusetzende Doppelbandpressen sind beispielsweise erhältlich bei Hymmen Industrieanlangen GmbH, Bielefeld, Deutschland.

### Komponente a)

Die als Komponente a) einzusetzenden Polyamid ist PA6.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer α,ω- Aminocarbonsäure bzw. von dem davon abgeleiteten Lactam, im Falle des PA6 also dem ε-Caprolactam, ausgegangen worden ist; im Übrigen sei verwiesen auf H. Domininghaus, Die Kunststoffe und ihre Eigenschaften, Seiten 272 ff., VDI-Verlag, 1976**.**

Bevorzugt besitzt das als Komponente a) einzusetzende Polyamid eine Viskositätszahl bestimmt in einer 0,5 gew.-%igen Lösung in 96 gew.-%iger Schwefelsäure bei 25 °C gemäß ISO 307 im Bereich von 80 bis 180 ml/g, besonders bevorzugt im Bereich von 90 bis 160 ml/g eingesetzt.

Besonders bevorzugt wird als Komponente a) PA6 eingesetzt, ganz besonders bevorzugt ein PA6 mit einer Viskositätszahl bestimmt in einer 0,5 gew.-%igen Lösung in 96 gew.-%iger Schwefelsäure bei 25 °C gemäß ISO 307 zwischen 95 und 120 ml/g.

Die in den erfindungsgemäßen Zusammensetzungen einzusetzenden Polyamide können nach verschiedenen Verfahren hergestellt werden und aus unterschiedlichen Bausteinen synthetisiert. Zur Herstellung von Polyamiden sind eine Vielzahl von Verfahrensweisen bekannt, wobei je nach gewünschtem Endprodukt unterschiedliche Monomerbausteine sowie, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

Die als Komponente a) einzusetzenden Polyamid PA6 ist bevorzugt semikristalline Polyamide mit einem Schmelzpunkt von mindestens 180 °C. Semikristalline Polyamide besitzen gemäß DE 10 2011 084 519 A1 eine Schmelzenthalpie von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

### Komponente b)

Als Komponente b) wird wenigstens ein Kupferhalogenid der Gruppe Kupferchlorid, Kupferbromid und Kupferiodid in Kombination mit wenigstens einem Natrium- oder Kaliumhalogenid der Gruppe Natriumchlorid, Natriumbromid, Natriumiodid, Kaliumchlorid, Kaliumbromid und Kaliumiodid eingesetzt.

### Komponente c)

Die als Komponente c) einzusetzenden Amidwachse sind bevorzugt Verbindungen, die mittels einer Kondensationsreaktion von langkettigen Carbonsäuren mit mono- oder polyfunktionalen Aminen hergestellt werden können.

Erfindungsgemäß bevorzugt werden für die Synthese der Amidwachse verzweigte oder lineare langkettige aliphatische Carbonsäuren mit mehr als 11 Kohlenstoffatomen eingesetzt. Besonders bevorzugt liegt die Kettenlänge der aliphatischen Carbonsäuren im Bereich von 12 bis 36 Kohlenstoffatomen. Ganz besonders bevorzugt sind aliphatische Carbonsäuren, deren Kettenlänge im Bereich von 14 bis 22 Kohlenstoffatomen liegt. Insbesondere bevorzugt sind lineare gesättigte aliphatische Carbonsäuren mit einer Kettenlänge im Bereich von 14 bis 22 Kohlenstoffatomen. Insbesondere besonders bevorzugt ist der Einsatz wenigstens einer Carbonsäure der Gruppe Laurinsäure, Isotridecansäure, Myristinsäure, Palmitinsäure, Margarinsäure, Stearinsäure, Isostearinsäure, Arachinsäure, Behensäure, Lignocerinsäure, Cerotinsäure, Montansäure, Melissinsäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Nervonsäure, Linolsäure, Linolensäure, Calendulasäure, Elaeostearinsäure, Punicinsäure, Arachidonsäure, Timmodonsäure, Clupanodonsäure und Cervonsäure sowie deren technische Mischungen Insbesondere ganz besonders bevorzugt ist der Einsatz wenigstens einer Carbonsäure der Gruppe Margarinsäure, Stearinsäure, Arachinsäure und Behensäure, insbesondere wird Stearinsäure bevorzugt.

Die aliphatischen Carbonsäuren zur Synthese der als Komponente c) einzusetzenden Amidwachse können alleine oder in Mischung eingesetzt werden. Bevorzugt werden technische aliphatische Carbonsäuren eingesetzt, die normalerweise als Mischung von Carbonsäuren mit unterschiedlicher Kettenlänge vorliegen, wobei eine Kettenlänge dominiert. Besonders bevorzugt wird technische Stearinsäure eingesetzt, die hauptsächlich Stearinsäure sowie in geringeren Mengen Palimitinsäure und andere Carbonsäuren enthält.

Als mono- oder polyfunktionale Amine werden Alkylamine mit einer oder mehreren Amingruppen eingesetzt, wobei die Amingruppen primärer oder sekundärer Natur sein können und die Alkylkomponente gesättigt oder ungesättigt sein kann und weitere Substituenten enthalten kann. Bevorzugt finden Alkylamine mit endständigen primären Amingruppen Verwendung. Besonders bevorzugt sind lineare gesättigte Alkylamine mit zwei endständigen primären Amingruppen. Ganz besonders bevorzugt wird zur Synthese der erfindungsgemäß einzusetzenden Amidwachse Ethylendiamin eingesetzt.

Insbesondere besonders bevorzugt wird als Amidwachs der Komponente c) Ethylen-Bis-stearamid eingesetzt. Insbesondere ganz besonders bevorzugt wird Ethylen-Bis-stearamid, hergestellt aus technischer Stearinsäure, eingesetzt, die eine Mischung der reinen Stearinsäure mit weiteren Carbonsäuren, hauptsächlich Palmitinsäure, ist.

### Komponente d)

Eine Langfaserverstärkung als Komponente d) im Sinne der vorliegenden Erfindung zeichnet sich dadurch aus, dass sie zu mindestens 90 Gew.-% aus Fasern besteht wovon mindestens 80 % eine Länge von mindestens 5 mm, bevorzugt mindestens 20 mm aufweisen. Die einzelnen Fasern der Langfaserverstärkung haben im Mittelwert einen Durchmesser von 5 bis 25 µm, bevorzugt von 5 bis 20 µm, besonders bevorzugt 8 bis 18 µm. Die Obergrenze der Faserlänge in der Langfaserverstärkung wird, wie oben beschrieben, im jeweiligen Erzeugnis durch die Verarbeitungsweise festgelegt.

Dem Fachmann ist der Einsatz von Langfaserverstärkungen zur Herstellung faserverstärkter Kunststofferzeugnisse prinzipiell bekannt, beispielsweise aus DE 19756126 A1**,** deren Inhalt von der vorliegenden Anmeldung vollumfänglich mit umfasst wird. DE 10 2007 007 443 A1 offenbart zudem ein Verfahren zur Herstellung von Kunststoffplatten mit einer Langfaserverstärkung, worin ein Mischvlies zum Einsatz kommt. Thermoplastische Faser-Matrix-Halbzeuge werden gemäß Schürmann, "Konstruieren mit Faser-Kunststoff-Verbunden", Springer-Verlag Berlin Heidelberg 2005, 2007, Seiten 156-157 in folgende Gruppen unterteilt:
- Mit Langfasern verstärkte Systeme:
- GMT: glasmattenverstärkte Thermoplaste;
- LFT: langfaserverstärkte Thermoplaste
- Mit Endlosfasern verstärkte Systeme: Thermoplastische Prepregs

Bevorzugt wird als Langfaserverstärkung wenigstens eine Langfaser aus der Gruppe der
- Glasfasern (Oberbach, Baur, Brinkmann, Schmachtenberg, "Saechtling Kunststoff Taschenbuch", Carl Hanser Verlag München Wien 2004, Seiten 644-647),
- metallisierten Glasfasern
- Kohlenstofffasern (Oberbach, Baur, Brinkmann, Schmachtenberg, "Saechtling Kunststoff Taschenbuch", Carl Hanser Verlag München Wien 2004, Seite 648),
- Naturfasern (Oberbach, Baur, Brinkmann, Schmachtenberg, "Saechtling Kunststoff Taschenbuch", Carl Hanser Verlag München Wien 2004, Seiten 650-652, 778-779),
- Kunststofffasern, insbesondere Hochtemperatur-Kunststofffasern (Oberbach, Baur, Brinkmann, Schmachtenberg, "Saechtling Kunststoff Taschenbuch", Carl Hanser Verlag München Wien 2004, Seiten 648-650), bevorzugt Aramidfasern (Kunststoff-Handbuch, Bd. 3/4, Seiten 106-107, Carl Hanser Verlag München Wien 1998),
- Stahlfasern,
- Mineralfasern, insbesondere Basaltfasern
eingesetzt.

Erfindungsgemäß als Komponente d) einzusetzende Langfasern können Endlos-Fasern sein, die gemäß DIN 60000 ein linienförmiges Gebilde von praktisch unbegrenzter Länge, das sich textil verarbeiten lässt, darstellen. Als Langfasern werden gemäß "http://de.wikipedia.org/wiki/Langfaser" aber auch Naturfasern bezeichnet, die eine Länge von über 100 mm haben. Sie stellen das Zielprodukt des traditionellen Faseraufschlusses dar und sind im Vergleich zur Herstellung von Kurzfasern, bei denen die vollständigen Fasern genutzt werden (Gesamtlinie), aufwändiger zu gewinnen und zu verarbeiten. Sie werden vor allem in der Textilproduktion verwendet. Länger als Langfasern sind nur Filamente wie z.B. Seide oder Kunstfaserfilamente, die nur durch das Spulenvolumen begrenzt werden. Bei Chemiefasern spricht man von Filamenten wohingegen die einzige in der Natur vorkommende textile Endlos-Faser Seide ist. Im Rahmen der vorliegenden Erfindung wird der Begriff Langfaser auch auf die oben genannten erfindungsgemäß einzusetzenden Fasern angewandt. Ist das Imprägnat kein Granulat, so weisen die Langfasern der Langfaserverstärkung d) bevorzugt eine Länge im Bereich von 100 mm bis 2000 mm auf.

In einer bevorzugten Ausführungsform der vorliegenden Erfindung sind die als Komponente d) einzusetzenden Langfasern bzw. daraus hergestellte Gelege, Gewebe, Geflechte, Gestricke, Gesticke, Faserkabel, Vliese oder Rovings oberflächenmodifiziert, besonders bevorzugt mit einem Haftvermittler bzw. Haftvermittlersystem, ganz besonders bevorzugt mit einem Haftvermittler auf Silanbasis. Die Vorbehandlung ist jedoch nicht unbedingt erforderlich.

Insbesondere bei Verwendung von Glasfasern werden zusätzlich zu Silanen bevorzugt auch Polymerdispersionen, Emulgatoren, Filmbildner (beispielsweise Polyepoxid-, Polyether-, Polyolefin-, Polyvinylacetat-, Polyacrylat- oder Polyurethanharze oder Mischungen davon), Verzweiger, weitere Haftvermittler, Gleitmittel, pH-Puffersubstanzen und/oder Glasfaser-verarbeitungshilfsmittel, insbesondere Netzmittel und/oder Antistatika, verwendet. Die weiteren Haftvermittler, Gleitmittel und sonstigen Hilfsstoffe, Verfahren zur Herstellung der Schlichten, Verfahren zur Beschlichtung und Nachbearbeitung der Glasfasern sind bekannt und beispielsweise in K.L. Löwenstein, "The Manufacturing Technology of Continuous Glass Fibres", Elsevier Scientific Publishing Corp., Amsterdam. London, New York, 1983, beschrieben. Die Glasfasern können über beliebige Methoden beschlichtet werden, bevorzugt mit Hilfe geeigneter Vorrichtungen, insbesondere mit Sprüh- oder Walzenapplikatoren. Auf die mit hoher Geschwindigkeit aus Spinndüsen gezogenen Glasfilamente können sofort nach ihrem Erstarren, d.h. noch vor dem Aufwickeln oder Schneiden, Schlichten aufgetragen werden. Es ist aber auch möglich, die Fasern im Anschluss an den Spinnprozess in einem Tauchbad zu beschlichten.

Die erfindungsgemäß insbesondere bevorzugt in der Langfaserverstärkung d) einzusetzenden Glasfasern weisen bevorzugt entweder eine kreisförmige Querschnittsfläche und einen Filament-Durchmesser im Bereich von 5 bis 25 µm, bevorzugt im Bereich von 6 bis 18 µm, besonders bevorzugt im Bereich von 9 und 15 µm auf, oder sie haben eine flache Gestalt und nicht-kreisförmige Querschnittsfläche mit einer Breite der Hauptquerschnittsachse im Bereich von 6 - 40 µm und einer Breite der Nebenquerschnittsachse im Bereich von 3 - 20 µm. Die Glasfasern werden bevorzugt aus der Gruppe der E-Glasfasern, A-Glasfasern, C-Glasfasern, D-Glasfasern, S-Glasfasern und / oder R-Glasfasern ausgewählt.

Ganz besonders bevorzugte Haftvermittler auf Silanbasis für die Vorbehandlung der in Komponente d) einzusetzenden Langfasern sind Silanverbindungen der allgemeinen Formel (I)

(X-(CH₂)_{q})ₖ-Si-(O-CᵣH₂ᵣ₊₁)₄₋ₖ (I)

in der die Substituenten folgende Bedeutung haben:
- X:: NH₂-, HO-,

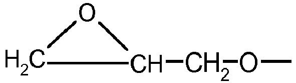

- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Ganz besonders bevorzugte Haftvermittler sind monomere organofunktionelle Silane, insbesondere 3-Aminopropyltrimethoxysilan, Aminobutyltrimethoxysilan, 3-Aminopropyltriethoxysilan, Aminobutyltriethoxysilan, 3-Aminopropyltris-methoxyethoxysilan, 3-Aminopropyl-methyl-diethoxysilan, N-Methyl-2-Aminoethyl-3-aminopropyltrimethoxysilan, N-Methyl-2-Aminoethyl-3-aminopropyl-methyl-dimethoxysilan, N-Methyl-3-aminopropyltrimethoxysilan, 3-Glycidyloxypropyltrimeth-oxysilan, 3-Methacryloxypropyltrimethoxysilan, 3-Mercaptopropyl¬tri¬methoxysilan, Vinyl-triethoxysilan, Vinyltrimethoxysilan, N-β-(aminoethyl)-γ-aminopropyltrimethoxysilan (Dynasilan Damo von Hüls AG), N-β-(aminoethyl)-γ-aminopropyltriethoxysilan, N-β-(aminoethyl)-γ-aminopropylmethyldimethoxysilan, N-β-(aminoethyl)-N-β-(aminoethyl)-γ-aminopropyltrimethoxysilan.

Insbesondere bevorzugte Haftvermittler sind Silanverbindungen aus der Gruppe Aminopropyltrimethoxysilan, Aminobutyltrimethoxysilan, Aminopropyltriethoxysilan und Aminobutyltriethoxysilan sowie die entsprechenden Silane, welche in Formel (I) als Substituent X eine Glycidylgruppe enthalten.

Für die Ausrüstung der als Langfasern einzusetzenden Glasfasern werden die Silanverbindungen bevorzugt in Mengen im Bereich von 0,025 bis 0,4 Gew.-%, besonders bevorzugt im Bereich von 0,05 bis 0,3 Gew.-% bezogen auf die Glasfasern zur Oberflächenbeschichtung eingesetzt.

Bevorzugt werden Langfaserverstärkungen eingesetzt, in denen mehrere Langfasern zu einem Garn zusammengefasst sind. Bevorzugt werden Garne aus E-Glasfasern mit 30 bis 5000 tex und Carbonfasern mit 1.000 bis 24.000 Fasern pro Garn, besonders bevorzugt mit 2.000 bis 4.000 Fasern pro Garn, eingesetzt.

Bevorzugt werden im Falle von (IIb) und (IIIb) Garne mit gedrehten, gezwirnten oder ungedrehten Langfasern verwendet. Besonders bevorzugt werden Garne mit ungedrehten Langfasern verwendet.

Bevorzugte Langfaserverstärkungen im Sinne dieser Erfindung liegen in Form eindimensionaler, zweidimensionaler oder dreidimensionaler Struktur vor.

Eindimensionale Langfaserverstärkungen im Sinne dieser Erfindung sind die oben beschriebenen Langfasern und Garne, die direkt im erfindungsgemäßen Verfahren eingesetzt werden.

Zweidimensionale Langfaserverstärkungen im Sinne dieser Erfindung sind Vliese, Gelege, Gewebe, Geflechte und Gestricke, welche die oben erfindungsgemäß einzusetzenden Langfasern und Garne enthalten. Bevorzugte zweidimensionale Langfaserverstärkungen sind Vliese, Gewebe und Gelege.

Dreidimensionale Langfaserverstärkungen im Sinne dieser Erfindung sind Vliese, Gelege, Gewebe, Geflechte und Gestricke, welche die oben beschriebenen Langfasern und Garne enthalten und bei denen mindestens ein Teil der Langfasern und Garne eine Krümmung aufweisen. Bevorzugte dreidimensionale Langfaserverstärkungen sind Rundgeflechte, besonders bevorzugt biaxiale oder triaxiale Rundgeflechte.

Erfindungsgemäß als Komponente d) einzusetzende Langfasern bzw- Langfasergewebe sind als StarRov® bei Johns Manville erhältlich, insbesondere StarRov® LFT Plus PR 440 2400 871.

Bevorzugte **Zusatzstoffe** der Langfaserverstärkung sind auszuwählen aus der Gruppe Bindemittel, Schlichte oder Verbindungsfasern.

Erfindungsgemäß bevorzugt ist die Komponente d) oder sind die zur Herstellung der Komponente d) eingesetzten Langfasern mit einer **Schlichte** überzogen. Besonders bevorzugt liegt der Gehalt der Schlichte im Bereich von 0,1 bis 1 Gew.-% des Gesamtgewichts der Langfaserverstärkung bzw. der einzusetzenden Langfasern.

Zusätzliche **Bindemittel,** insbesondere im Falle dass die Langfasern in Form von Gelegen, Geweben, Geflechten, Gestricken, Gesticken, Vliesen, Faserkabeln oder Rovings **("**Maßgeschneiderte Verstärkungstextilien", Kunststoffe 06/2003, Carl Hanser Verlag, Seiten 46-49**)** vorliegen, summieren sich auf bis zu maximal 10 % des Gewichts der Komponente d). Bevorzugt werden als Bindemittel Acrylharze, Butadien-Styrol-Polymere, Butadien-Acrylnitril- Polymere, Polyurethane, Polyester, Polyamide oder Vinylesterharze eingesetzt, besonders bevorzugt als wässrige Dispersionen im Rahmen der Herstellung der Langfaserverstärkungen.

Im Falle, dass als Langfaserverstärkung Gelege, Gewebe, Geflechte, Gestricke, Gesticke oder Vliese eingesetzt werden, werden bevorzugt Verbindungsfasern eingesetzt, um die Stabilität der Langfasern vor der Imprägnierung mit Imprägnat zu verbessern. Besonders bevorzugt werden **Verbindungsfasern** aus Glas oder einem thermoplastischem Polymer, insbesondere Verbindungsfasern aus E-Glas, Polyamid oder Polyester eingesetzt. Dem Fachmann ist der Einsatz von Verbindungsfasern zur Erhöhung der Stabilität von Langfaserverstärkungen aus beispielsweise WO90/12911 A1 bekannt.

### Komponente e)

Die erfindungsgemäßen Zusammensetzungen und die durch Mischen der Komponenten daraus erhältlichen Formmassen können in einer bevorzugten Ausführungsform zusätzlich zu den Komponenten a) bis d) weitere, von den Komponenten b) und c) unterschiedliche Additive als Komponente e) enthalten.

Weitere Additive e) im Sinne der vorliegenden Erfindung sind bevorzugt wenigstens eine Komponente aus der Gruppe der Gammastrahlenstabilisatoren, der Hydrolysestabilisatoren, der Antistatika, der Emulgatoren, der Nukleierungsmittel, der Weichmacher, der Verarbeitungshilfsmittel, der Schlagzähmodifikatoren, der Elastomermodifikatoren, der Gleitmittel, der Entformungsmittel, der Farbstoffe oder der Pigmente.

Die genannten und weitere als Komponente e) geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden.

Die als Komponente e) einzusetzenden Additive können alleine oder in Mischung bzw. in Form von Masterbatchen eingesetzt werden. Bevorzugt werden weitere Additive e) im Rahmen des Verfahrensschritts (la) zu den Komponenten a), b) und c) hinzu dosiert.

Im Falle der erfindungsgemäßen thermoplastischen Formmassen, die als Zwischenprodukt nach dem Verfahrensschritt (la) anfallen, ist die Summe aller Gewichtsprozente stets 100 indem die Mengen der Komponenten a), b), c) und d), bevorzugt der Komponenten a) und d), in der Menge reduziert werden, wie an Additiven hinzu gefügt wird.

Im Falle der erfindungsgemäß als Komponente e) bevorzugt einzusetzenden Schlagzähmodifikatoren oder Elastomermodifikatoren handelt es sich ganz allgemein um Copolymerisate, die bevorzugt aus mindestens zwei Monomeren aus der Gruppe Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente aufgebaut sind. Die Copolymerisate können kompatibilisierende Gruppen, bevorzugt Maleinsäureanhydrid oder Epoxid enthalten.

Erfindungsgemäß als Additive) bevorzugt einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone, sowie andere Farbmittel.

Erfindungsgemäß als Additiv e) bevorzugt einzusetzende Nukleierungsmittel sind Natrium- oder Calciumphenylphosphinat, Aluminiumoxid, Siliziumdioxid oder Talkum, besonders bevorzugt Talkum.

Ferner ist auch Gegenstand der vorliegenden Erfindung die **Verwendung einer Mischung** aus wenigstens einem Wärmestabilisator und wenigstens eines Esterwachses und/oder wenigstens eines Amidwachses zur Reduktion der Emissionen in Prozessen, in denen Langfaserverstärkungen mit einer thermoplastischen Schmelze imprägniert werden, die PA6 oder PA66 oder ein Co-Polyamid von PA6 oder PA66 enthält.

Bevorzugt ist die Verwendung einer Mischung aus wenigstens einem Wärmestabilisator und wenigstens eines Esterwachses und/oder wenigstens eines Amidwachses zur Reduktion der Emissionen in Prozessen, in denen Langfaserverstärkungen die zu 90 Gew.-% aus Fasern mit einem Faserdurchmesser von 5 - 25 µm bestehen, wovon mindestens 80 % der Fasern eine Faserlänge von wenigstens 5 mm aufweisen und die bis zu 10 Gew.-% weitere Zusatzstoffe enthalten, mit einer thermoplastischen Schmelze, die zu mindestens 30 Gew.-% PA6 und/oder PA66 und/oder ein Co-Polyamid von PA6 oder PA66 enthält, zu einem Imprägnat imprägniert werden.

Bevorzugte Prozesse in denen Langfaserverstärkungen mit einer thermoplastischen Schmelze imprägniert werden sind das Austragen, Portionieren oder die Überführung eines Imprägnats in weitere Verarbeitungsprozesse.

Erfindungsgemäß bevorzugt ist die Verwendung Kupfer(l)iodid in Kombination mit Kaliumbromid und/oder Kaliumiodid als Komponente b) und N,N'-Ethylenbisstearamid [CAS No. 110-30-5] als Komponente c).

Gegenstand der vorliegenden Erfindung sind ganz besonders bevorzugt Zusammensetzungen enthaltend als Edukte
a) PA6 oder PA66 oder ein Co-Polyamid von PA6 oder PA66,
b) Kupfer(l)iodid in Kombination mit Kaliumbromid und/oder Kaliumiodid,
c) N,N'-Ethylenbisstearamid, und
d) eine Langfaserverstärkung, die zu 90 Gew.-% aus Fasern mit einem Faserdurchmesser von 5 bis 25 µm besteht, wovon mindestens 80 % eine Faserlänge von wenigstens 5 mm aufweisen und die bis zu 10 Gew.-% wenigstens eines Zusatzstoffes enthält.

Gegenstand der vorliegenden Erfindung sind ganz besonders bevorzugt Zusammensetzungen enthaltend als Edukte
a) 15 bis 89,79 Gew.-% PA6 oder PA66 oder ein Co-Polyamid von PA6 oder PA66,
b) 0,01 bis 2 Gew.-% Kupfer(l)iodid in Kombination mit Kaliumbromid und/oder Kaliumiodid,
c) 0,05 bis 3 Gew.-% N,N'-Ethylenbisstearamid,
d) 10 bis 80 Gew.-% Langfaserverstärkung, die zu 90 Gew.-% aus Fasern mit einem Faserdurchmesser von 5 bis 25 µm besteht, wovon mindestens 80 % eine Faserlänge von wenigstens 5 mm aufweisen und die bis zu 10 Gew.-% wenigstens eines Zusatzstoffes enthält, und
e) 0,1 bis 30 Gew.-% wenigstens eines weiteren Additivs,
wobei die Summe aller Gewichtsprozente stets 100 Gew.-% ergibt.

Das Verfahren des Spritzgusses, welches sich an das oben beschriebene erfindungsgemäße Verfahren in den Varianten (I), (II) und (III) beispielsweise anschließt, zeichnet sich dadurch aus, dass die erfindungsgemäße Zusammensetzung, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt. Siehe: http://de.wikipedia.org/wiki/Spritzgie%C3%9Fen.

Man unterscheidet dabei die Schritte
1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze aus der erfindungsgemäß einzusetzenden Zusammensetzung gelöst, gekühlt und somit das zu fertigende Erzeugnis gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion (Siehe: http://de.wikipedia.org/wiki/Extrusion_(Verfahrenstechnik)) ein endlos geformter Kunststoffstrang, enthaltend eine erfindungsgemäße Zusammensetzung,hin einen Extruder eingesetzt, wobei der Extruder eine Maschine zur Herstellung thermoplastischer Formstücke ist. Man unterscheidet
- Einschneckenextruder und Doppelschneckenextruder sowie die jeweiligen Untergruppen
- konventioneller Einschneckenextruder, förderwirksamer Einschneckenextruder,
- gegenläufige Doppelschneckenextruder und gleichläufige Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere Langfaserverstärkte Erzeugnisse, erhältlich durch Extrusion oder Spritzguss der in Form von Granulaten vorliegenden Zusammensetzungen enthaltend als Edukte
a) PA6 oder PA66 oder ein Co-Polyamid von PA6 oder PA66,
b) wenigstens einen Wärmestabilisator,
c) wenigstens ein Amidwachs und/oder wenigstens ein Esterwachs sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen, und die bis zu 10 Gew.-% wenigstens eines Zusatzstoffes enthält.

### Beispiele

Die in Tabelle 1 genannten Komponenten wurden in einem Zweiwellenextruder des Typs ZSK 26 der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet. Erfindungsgemäß bedeutet Granulierfähigkeit, dass der Strang vom Granulatormesser durchtrennt werden kann ohne Fäden zu ziehen.

**Tabelle 1: Zusammensetzung der erfindungsgemäßen Beispiele und Beurteilung der Emission bei Extrusion mit Langglasfasern.**

| | Beispiel 1 | Beispiel 2 |
|---|---|---|
| Polyamid 6 A | 99,25 | |
| Polyamid 6 B | | 99,25 |
| N,N'-Ethylenbisstearamid | 0,25 | 0,25 |
| Kupfer(l)iodid | 0,06 | 0,06 |
| Kaliumbromid | 0,16 | 0,16 |
| Ruß | 0,25 | 0,25 |
| Talkum | 0,03 | 0,03 |
| | | |
| Beurteilung der Emissionen bei Extrusion mit Langglasfasern [1-5] | 1 | 1 |

Die Zusammensetzungen der erfindungsgemäßen Beispiele 1 und 2 wurden in einem Zweiwellenextruder aufgeschmolzen und auf eine Temperatur von 280 °C erwärmt. Anschließend wurden Langglasfasern in die Schmelze eindosiert, wobei die Dosierung so eingestellt wurde, dass der Anteil der Langglasfasern einschließlich der Zusatzstoffe in Form von Bindemitteln, Schlichten oder bei 30 Gew.-% bezogen auf die gesamte Zusammensetzung einschließlich Langglasfasern lag. Die Thermoplast-Schmelze wurde durch eine Breitschlitzdüse ausgetragen und die Emissionen an der Düse wurden visuell mit einer Note auf einer Skala von 1 bis 5 bewertet. Dabei steht eine 1 für nur sehr geringe beobachtete Emissionen in Form rauchender Zersetzungsprodukte des Polyamids und eine 5 für sehr starke und störende Emissionen. Bei beiden erfindungsgemäßen Beispielen wurden nur sehr geringe Emissionen beobachtet.

### Verwendete Materialien:

Polyamid 6 A, linear mit einer Viskositätszahl bestimmt in einer 0,5 gew.-%igen Lösung in 96 gew.-%iger Schwefelsäure bei 25 °C gemäß ISO 307 von 145 ml/g
Polyamid 6 B, linear mit einer Viskositätszahl bestimmt in einer 0,5 gew.-%igen Lösung in 96 gew.-%iger Schwefelsäure bei 25 °C gemäß ISO 307 von 107 ml/g
N,N'-Ethylenbisstearamid, z. B. Acrawax® C von Lonza Cologne GmbH
Kupfer(l)iodid, d99 < 70 µm
Kaliumbromid, d99 < 70 µm

### Talkum

Langglasfaser mit einem nominellen Durchmesser von 16 µm, einem Schlichtegehalt von ca. 0,3 %, einer linearen Dichte von 2.400 text und einer Länge von ca. 8.300 m, z.B. StarRov® LFT Plus PR 440 2400 871 von Johns Manville

## Patentansprüche

1. Zusammensetzungen enthaltend als Edukte
a) PA6,
b) wenigstens einen Wärmestabilisator und
c) wenigstens ein Amidwachs sowie
d) eine Langfaserverstärkung, die zu mindestens 90 Gew.-% aus Fasern mit einem Faserdurchmesser im Bereich von 5 bis 25 µm besteht, wovon mindestens 80 % der Fasern eine Länge von wenigstens 5 mm aufweisen und die bis zu 10 Gew.-% wenigstens eines Zusatzstoffes enthält,
wobei als Wärmestabilisator wenigstens ein Kupferhalogenid der Gruppe Kupferchlorid, Kupferbromid und Kupferiodid in Kombination mit wenigstens einem Natrium- oder Kaliumhalogenid aus der Gruppe Natriumchlorid, Natriumbromid, Natriumiodid, Kaliumchlorid, Kaliumbromid und Kaliumiodid eingesetzt wird.

2. Zusammensetzungen gemäß Anspruch 1, enthaltend als Edukte
a) 15 bis 89,79 Gew.-% PA6,
b) 0,01 bis 2 Gew.-% wenigstens eines Wärmestabilisators,
c) 0,05 bis 3 Gew.-% wenigstens eines Amidwachses sowie
d) 10,1 bis 80 Gew.-% Langfaserverstärkung, die zu mindestens 90 Gew.-% aus Fasern mit einem Faserdurchmesser im Bereich von 5 bis 25 µm besteht, wovon mindestens 80 % eine Länge von wenigstens 5 mm aufweisen, und die Langfaserverstärkung bis zu 10 Gew.-% wenigstens eines Zusatzstoffes enthält,
wobei die Summe aller Gewichtsprozente stets 100 ist und als Wärmestabilisator wenigstens ein Kupferhalogenid der Gruppe Kupferchlorid, Kupferbromid und Kupferiodid in Kombination mit wenigstens einem Natrium- oder Kaliumhalogenid aus der Gruppe Natriumchlorid, Natriumbromid, Natriumiodid, Kaliumchlorid, Kaliumbromid und Kaliumiodid eingesetzt wird.

3. Zusammensetzungen gemäß einem der Ansprüche 1 oder 2, **dadurch gekennzeichnet, dass** als Amidwachs wenigstens eine Verbindung eingesetzt wird, die mittels einer Kondensationsreaktion von langkettigen Carbonsäuren mit mono- oder polyfunktionalen Aminen hergestellt wird.

4. Zusammensetzungen gemäß Anspruch 3, **dadurch gekennzeichnet, dass** als Amidwachs Ethylen-Bis-stearamid eingesetzt wird.

5. Zusammensetzungen gemäß einem der Ansprüche 1 bis 4, **dadurch gekennzeichnet, dass** als Wärmestabilisator Kupfer(l)iodid mit Kaliumbromid eingesetzt wird.

6. Zusammensetzungen gemäß einem der Ansprüche 1 bis 5, **dadurch gekennzeichnet, dass** die Zusatzstoffe auszuwählen sind aus der Gruppe Bindemittel, Schlichte und Verbindungsfasern.

7. Zusammensetzungen gemäß einem der Ansprüche 1 bis 6, **dadurch gekennzeichnet, dass** es sich um Granulate mit einer Länge von wenigstens 5 mm, um Zwischenprodukte, um endlosfaserverstärkte Halbzeuge sowie um Erzeugnisse, Formteile oder Bauteile handelt.

8. Zusammensetzungen gemäß Anspruch 7, **dadurch gekennzeichnet, dass** in den endlosfaserverstärkten Halbzeugen, Erzeugnissen, Formteilen oder Bauteilen die Langfasern eine Länge bis hin zu mehreren Metern aufweisen.

9. Zusammensetzungen gemäß Anspruch 7, **dadurch gekennzeichnet, dass** in den Granulaten die Langfasern eine parallele Ausrichtung zur Länge der einzelnen Granulatkörner aufweisen.

10. Zusammensetzungen gemäß einem der Ansprüche 1 bis 9, **dadurch gekennzeichnet, dass** die Langfaserverstärkung wenigstens eine Langfaser aus der Gruppe der Glasfasern, der Kohlenstofffasern, der Naturfasern, der Kunststofffasern, der Stahlfasern und der Mineralfasern enthält.

11. Verfahren zur Herstellung der Zusammensetzungen gemäß einem der Ansprüche 1 bis 10, **dadurch gekennzeichnet, dass** man als Edukte die Komponenten
a) Polyamid 6,
b) wenigstens einen Wärmestabilisator,
c) wenigstens ein Amidwachs
(la) bei Temperaturen im Bereich von 220 bis 400 °C und bei Drücken im Bereich von 2 bis 50 bar in einem Mischwerkzeug (1) vermischt und aufschmilzt,
(Ib) danach die Komponente d) in Form von Fasern zur Schmelze enthaltend die Komponenten a) bis c) im Mischwerkzeug (1) hinzu gibt und vermischt, und schließlich
(Ic) die Schmelze enthaltend die Komponenten a) bis d) aus dem Mischwerkzeug (1) austrägt und gegebenenfalls weiteren Verarbeitungsschritten unterwirft,
oder nach dem Verfahrensschritt (la)
(IIb) die Schmelze enthaltend die Komponenten a) bis c) aus dem Mischwerkzeug (1) in ein Mischwerkzeug (2) überführt und die Komponente d) in Form von Fasern oder Garnen der Schmelze im Mischwerkzeug (2) zuführt und mit dieser Schmelze imprägniert, und
(IIc) danach die Schmelze enthaltend die Komponenten a) bis d) im Mischwerkzeug (2) über einen Mischwerkauslass austrägt und gegebenenfalls weiteren Verarbeitungsschritten unterwirft,
oder nach dem Verfahrensschritt (la)
(IIIb) die Komponente d) in Form von Fasern oder Garnen in dasselbe Mischwerkzeug (1) des Verfahrensschrittes (la) dosiert, und
(IIIc) danach die Schmelze enthaltend die Komponenten a) bis d) über einen Mischwerkzeugauslass austrägt und gegebenenfalls weiteren Verarbeitungsschritten unterwirft,
oder nach dem Verfahrensschritt (la)
(IVb) die Schmelze aus dem Mischwerkzeug (1) über einen Mischwerkzeugauslass mit wenigstens zwei Lagen der in zweidimensionaler Form vorliegenden Komponente d) in Kontakt bringt, und
(IVc) diese Mischung der Komponenten a) bis d) in ein Presswerkzeug überführt und miteinander zu einem Erzeugnis verpresst,
wobei Komponente d) eine Langfaserverstärkung ist, die zu mindestens 90 Gew.-% Fasern mit einem Faserdurchmesser im Bereich von 5 bis 25 µm besteht, wovon mindestens 80 % eine Länge von wenigstens 5 mm aufweisen, und die bis zu 10 Gew.-% wenigstens eines Zusatzstoffes enthält und als Wärmestabilisator wenigstens ein Kupferhalogenid der Gruppe Kupferchlorid, Kupferbromid und Kupferiodid in Kombination mit wenigstens einem Natrium- oder Kaliumhalogenid aus der Gruppe Natriumchlorid, Natriumbromid, Natriumiodid, Kaliumchlorid, Kaliumbromid und Kaliumiodid eingesetzt wird.

12. Verfahren gemäß Anspruch 11, **dadurch gekennzeichnet, dass** im Falle von (IVb) Komponente d) in Form von Gelegen, Geweben, Geflechten, Gestricken, Gesticken, Vliesen, Faserkabeln oder Rovings eingesetzt wird.

## Claims

1. Compositions comprising, as starting materials,
a) PA6,
b) at least one heat stabilizer and
c) at least one amide wax, and also
d) a long-fibre reinforcement system which consists of at least 90% by weight of fibres with fibre diameter in the range from 5 to 25 µm, the length of at least 80% of these fibres being at least 5 mm, and which comprises up to 10% by weight of at least one additional substance,
where heat stabilizer used comprises at least one copper halide from the group of copper chloride, copper bromide and copper iodide in combination with at least one sodium or potassium halide from the group of sodium chloride, sodium bromide, sodium iodide, potassium chloride, potassium bromide and potassium iodide.

2. Compositions according to Claim 1 comprising, as starting materials,
a) from 15 to 89.79% by weight of PA6,
b) from 0.01 to 2% by weight of at least one heat stabilizer,
c) from 0.05 to 3% by weight of at least one amide wax, and also
d) from 10.1 to 80% by weight of long-fibre reinforcement system which consists of at least 90% by weight of fibres with fibre diameter in the range from 5 to 25 µm, the length of at least 80% of these fibres being at least 5 mm, and which comprises up to 10% by weight of at least one additional substance,
where the sum of all of the percentages by weight is always 100, and heat stabilizer used comprises at least one copper halide from the group of copper chloride, copper bromide and copper iodide in combination with at least one sodium or potassium halide from the group of sodium chloride, sodium bromide, sodium iodide, potassium chloride, potassium bromide and potassium iodide.

3. Compositions according to Claim 1 or 2, **characterized in that** amide wax used comprises at least one compound produced by means of a condensation reaction of long-chain carboxylic acids with mono- or polyfunctional amines.

4. Compositions according to Claim 3, **characterized in that** amide wax used comprises ethylenebisstearamide.

5. Compositions according to any of Claims 1 to 4, **characterized in that** heat stabilizer used comprises copper(I) iodide with potassium bromide.

6. Compositions according to any of Claims 1 to 5, **characterized in that** the additional substances are to be selected from the group of binder, size and binding fibres.

7. Compositions according to any of Claims 1 to 6, **characterized in that** they are pellets with length at least 5 mm, intermediate products, continuous-fibre-reinforced semifinished products, or else are mouldings, components, or finished products.

8. Compositions according to Claim 7, **characterized in that** the length of the long fibres in the mouldings, components, finished products, or continuous-fibre-reinforced semifinished products is up to a plurality of metres.

9. Compositions according to Claim 7, **characterized in that** the orientation of the long fibres in the pellets is parallel to the length of the individual pellet grains.

10. Compositions according to any of Claims 1 to 9, **characterized in that** the long-fibre reinforcement system comprises at least one long fibre from the group of the glass fibres, carbon fibres, natural fibres, synthetic fibres, steel fibres and mineral fibres.

11. Process for the production of compositions according to any of Claims 1 to 10, **characterized in that**, as starting materials, the components
a) polyamide 6,
b) at least one heat stabilizer,
c) at least one amide wax are
(Ia) mixed and melted at temperatures in the range from 220 to 400°C and at pressures in the range from 2 to 50 bar in a mixing device (1),
(Ib) component d) in the form of fibres is then added to the melt comprising components a) to c) in the mixing device (1) and mixed, and finally
(Ic) the melt comprising components a) to d) is discharged from the mixing device (1) and optionally subjected to further processing steps,
or after the step (Ia)
(IIb) the melt comprising components a) to c) is transferred from the mixing device (1) into a mixing device (2), and component d) in the form of fibres or yarns is introduced into the melt in the mixing device (2) and impregnated with this melt, and
(IIc) then the melt comprising components a) to d) in the mixing device (2) is discharged by way of a mixing unit outlet, and optionally subjected to further processing steps,
or after the step (Ia)
(IIIb) component d) in the form of fibres or yarns is metered into the same mixing device (1) of step (Ia), and
(IIIc) then the melt comprising components a) to d) is discharged by way of a mixing device outlet and optionally subjected to further processing steps,
or after the step (Ia)
(IVb) the melt from the mixing device (1) is brought into contact by way of a mixing device outlet with at least two plies of component d) in two-dimensional form, and
(IVc) this mixture of components a) to d) is transferred into a press device and pressed to give a product,
where component d) is a long-fibre reinforcement system which consists of at least 90% by weight of fibres with fibre diameter in the range from 5 to 25 µm, the length of at least 80% of these fibres being at least 5 mm, and which comprises up to 10% by weight of at least one additional substance, and heat stabilizer used comprises at least one copper halide from the group of copper chloride, copper bromide and copper iodide in combination with at least one sodium or potassium halide from the group of sodium chloride, sodium bromide, sodium iodide, potassium chloride, potassium bromide and potassium iodide.

12. Process according to Claim 11, **characterized in that** in the case of (IVb) component d) is used in the form of laid scrims, woven fabrics, braided fabrics, knitted fabrics, stitched fabrics, nonwoven fabrics, fibre tows or rovings.

## Revendications

1. Compositions contenant en tant que réactifs :
a) du PA6,
b) au moins un stabilisateur thermique, et
c) au moins une cire d'amide, ainsi que
d) un renforcement par des fibres longues, qui est constitué par au moins 90 % en poids de fibres ayant un diamètre de fibre dans la plage allant de 5 à 25 µm, parmi lesquelles au moins 80 % des fibres présentent une longueur d'au moins 5 mm, et qui contient jusqu'à 10 % en poids d'au moins un additif,
au moins un halogénure de cuivre du groupe constitué par le chlorure de cuivre, le bromure de cuivre et l'iodure de cuivre étant utilisé en tant que stabilisateur thermique en combinaison avec au moins un halogénure de sodium ou de potassium du groupe constitué par le chlorure de sodium, le bromure de sodium, l'iodure de sodium, le chlorure de potassium, le bromure de potassium et l'iodure de potassium.

2. Compositions selon la revendication 1, contenant en tant que réactifs :
a) 15 à 89,79 % en poids de PA6,
b) 0,01 à 2 % en poids d'au moins un stabilisateur thermique,
c) 0,05 à 3 % en poids d'au moins une cire d'amide, ainsi que
d) 10,1 à 80 % en poids d'un renforcement par des fibres longues, qui est constitué par au moins 90 % en poids de fibres ayant un diamètre de fibre dans la plage allant de 5 à 25 µm, parmi lesquelles au moins 80 % présentent une longueur d'au moins 5 mm, le renforcement par des fibres contenant jusqu'à 10 % en poids d'au moins un additif,
la somme de tous les pourcentages en poids étant toujours de 100, et au moins un halogénure de cuivre du groupe constitué par le chlorure de cuivre, le bromure de cuivre et l'iodure de cuivre étant utilisé en tant que stabilisateur thermique en combinaison avec au moins un halogénure de sodium ou de potassium du groupe constitué par le chlorure de sodium, le bromure de sodium, l'iodure de sodium, le chlorure de potassium, le bromure de potassium et l'iodure de potassium.

3. Compositions selon l'une quelconque des revendications 1 ou 2, **caractérisées en ce qu'**au moins un composé qui est fabriqué par une réaction de condensation d'acides carboxyliques à chaîne longue avec des amines mono- ou polyfonctionnelles est utilisé en tant que cire d'amide.

4. Compositions selon la revendication 3, **caractérisées en ce que** de l'éthylène-bis-stéaramide est utilisé en tant que cire d'amide.

5. Compositions selon l'une quelconque des revendications 1 à 4, **caractérisées en ce que** de l'iodure de cuivre (I) avec du bromure de potassium est utilisé en tant que stabilisateur thermique.

6. Compositions selon l'une quelconque des revendications 1 à 5, **caractérisées en ce que** les additifs sont choisis dans le groupe constitué par les liants, les agents d'encollage et les fibres de liaison.

7. Compositions selon l'une quelconque des revendications 1 à 6, **caractérisées en ce qu'**il s'agit de granulats ayant une longueur d'au moins 5 mm, de produits intermédiaires, de produits semi-finis renforcés par des fibres continues, ainsi que de produits, de pièces moulées ou de composants.

8. Compositions selon la revendication 7, **caractérisées en ce que** les fibres longues présentent une longueur de jusqu'à plusieurs mètres dans les produits semi-finis renforcés par des fibres continues, les produits, les pièces moulées ou les composants.

9. Compositions selon la revendication 7, **caractérisées en ce que**, dans les granulats, les fibres longues présentent une orientation parallèle à la longueur des grains de granulat individuels.

10. Compositions selon l'une quelconque des revendications 1 à 9, **caractérisées en ce que** le renforcement par des fibres longues contient au moins une fibre longue du groupe constitué par les fibres de verre, les fibres de carbone, les fibres naturelles, les fibres de plastique, les fibres d'acier et les fibres minérales.

11. Procédé de fabrication des compositions selon l'une quelconque des revendications 1 à 10, **caractérisé en ce qu'**en tant que réactifs, les composants
a) du polyamide 6,
b) au moins un stabilisateur thermique,
c) au moins une cire d'amide,
(Ia) sont mélangés et fondus à des températures dans la plage allant de 220 à 400 °C et à des pressions dans la plage allant de 2 à 50 bar dans un outil de mélange (1), puis
(Ib) le composant d) est ajouté sous la forme de fibres à la masse fondue contenant les composants a) à c) dans l'outil de mélange (1) et mélangé, et enfin
(Ic) la masse fondue contenant les composants a) à d) est déchargée de l'outil de mélange (1) et éventuellement soumise à des étapes de traitement supplémentaires,
ou, après l'étape de procédé (Ia),
(IIb) la masse fondue contenant les composants a) à c) est transférée depuis l'outil de mélange (1) dans un outil de mélange (2), et le composant d) est introduit dans la masse fondue dans l'outil de mélange (2) sous la forme de fibres ou de fils, et imprégné avec cette masse fondue, puis
(IIc) la masse fondue contenant les composants a) à d) est déchargée de l'outil de mélange (2) par une sortie de l'outil de mélange, et éventuellement soumise à des étapes de traitement supplémentaires,
ou, après l'étape de procédé (Ia),
(IIIb) le composant d) est introduit sous la forme de fibres ou de fils dans le même outil de mélange (1) qu'à l'étape de procédé (Ia), puis
(IIIc) la masse fondue contenant les composants a) à d) est déchargée par une sortie de l'outil de mélange et éventuellement soumise à des étapes de traitement supplémentaires,
ou, après l'étape de procédé (Ia),
(IVb) la masse fondue issue de l'outil de mélange (1) est mise en contact par le biais d'une sortie de l'outil de mélange avec au moins deux couches du composant (d) se présentant sous forme bidimensionnelle, et
(IVc) ce mélange des composants a) à d) est transféré dans un outil de compression, et comprimé pour former un produit,
le composant d) étant un renforcement par des fibres longues, qui est constitué par au moins 90 % en poids de fibres ayant un diamètre de fibre dans la plage allant de 5 à 25 µm, parmi lesquelles au moins 80 % présentent une longueur d'au moins 5 mm, et qui contient jusqu'à 10 % en poids d'au moins un additif, et au moins un halogénure de cuivre du groupe constitué par le chlorure de cuivre, le bromure de cuivre et l'iodure de cuivre étant utilisé en tant que stabilisateur thermique en combinaison avec au moins un halogénure de sodium ou de potassium du groupe constitué par le chlorure de sodium, le bromure de sodium, l'iodure de sodium, le chlorure de potassium, le bromure de potassium et l'iodure de potassium.

12. Procédé selon la revendication 11, **caractérisé en ce que**, dans le cas de (IVb), le composant d) est utilisé sous la forme de nappes, de tissus, de treillis, de tricots, de broderies, de non-tissés, de câbles de fibres ou de statifils.
